# EUROPEAN PATENT APPLICATION

(11) **EP 4 449 875 A1**
(43) Date of publication of application: **23.10.2024**
(21) Application number: 23168400.2
(22) Date of filing: 18.04.2023
(51) Int. Cl.: A23K 10/10, A23K 20/142, A23K 20/153, A23K 20/163, A23K 20/174, A23K 50/40

(54) **COMPOSITION FOR USE FOR IMPROVING OR PRESERVING MENTAL HEALTH IN CANINE**

(71) Applicant: Mars, Incorporated, McLean, VA 22101 (US)
(72) Inventor: HENZEL, Kristin, 30470 Aimargues (FR); GAILLARD, Virginie, 30470 Aimargues (FR); PERON, Franck, 30470 Aimargues (FR); JOLY, Willy, 30470 Aimargues (FR)
(74) Representative: Cabinet Nony

(57) **Abstract**

The present disclosure relates to the use of a food composition comprising, in % by weight, i) at least about 0.05% of nucleotides and ii) at least about 0.1% of oligosaccharides, wherein said oligosaccharides are selected from xylo-oligosaccharides (XOS), fructo-oligosaccharides (FOS), galacto-oligosaccharides (GOS), and combinations thereof, for improving or preserving mental health in a canine.

## Description

### FIELD OF THE DISCLOSURE

Various embodiments of the disclosure relate to the field of food products and compositions, such as food additives and supplements, and uses thereof. Those food compositions are particularly convenient for canine, especially dogs, for use for improving or preserving their mental health, such as cognitive functions and coping mechanisms. More particularly, the present disclosure relates to food products and compositions for improving or preserving mental health, such as cognitive functions and coping mechanisms, especially at an early age and at an advanced age. Those food compositions are particularly convenient for canine, especially dogs, for use for improving or preserving mental health, such as cognitive functions and coping mechanisms, in stressful situations, especially at an early age and at an advanced age.

### BACKGROUND OF THE DISCLOSURE

Improving or preserving mental health in canine is particularly important at the beginning and at the end of their life.

As it is known in the art, neurologic development in growing canine is influenced by genetic predisposition, environment, disease, and nutrition. Nutritional intervention for neurocognitive development and maintenance, specifically learning, memory and motor function tasks, in canine, especially dogs, have long been under-evaluated, compared with nutritional interventions for humans.

Currently, limited data is available on the impact of nutrition on neurocognitive development in young canine or on neurocognitive impairment in aged canine. The work done around unsaturated fatty acids, especially DHA, suggests that (i) early life nutrition has the potential to shape cognitive traits early on (Zicker et al., 2012, J Am Vet Med Assoc, Vol. 241 : 583-594 incorporated herein by reference) and that (ii) aged canine nutrition has the potential to reduce or delay cognitive functions impairment (PCT application published under n° WO 2009/088433 incorporated herein by reference). In fact, reducing or delaying cognitive functions impairment remain relevant throughout the whole adult canine life.

Aged canine frequently suffers some degree of cognitive impairment. In the UK, it has been shown that approximately one third of dogs showed signs of confusion, restlessness and less enjoyment of life, while one in five exhibited an increased incidence of house soiling problems (Heath et al., 2007, Applied Animal Behaviour Science,Vol. 105 (4) : 284-296, incorporated herein by reference). In aged Beagles (i.e. 8 or more years old), complex mixtures of antioxidants added to maintenance-type foods have been shown to slow the onset of cognitive decline and associated with neuropathologic changes (Head et al., 2007, Ann N Y Acad, Vol. 1114 : 398-406 Incorporated herein by reference).

Also, nutritional factors can dramatically affect development of young animals during the early stage of life. Newborn puppies have only 10% of their adult brain mass and considerable growth occurs during the first months of life. DHA is known as a key building block for neural tissues and is important for brain function.

There remains a need for food compositions for preserving or improving mental health , such as cognitive functions and coping mechanisms, in companion animals.

There remains a need for food compositions for preserving or improving mental health, such as cognitive functions and coping mechanisms, in canine animals.

There remains a need for food compositions for developing or improving mental health, such as cognitive functions and coping mechanisms, in young canine, especially in puppies.

There also remains a need for food compositions for preserving, sustaining, reducing impairment, of mental health, such as cognitive functions and coping mechanisms, in aged canine.

The disclosure has for purpose to meet the above-mentioned needs.

### SUMMARY OF THE DISCLOSURE

The purpose and advantages of the disclosed subject matter will be set forth in and are apparent from the description that follows, as well as will be learned by practice of the disclosed subject matter. Additional advantages of the disclosed subject matter will be realized and attained by the devices particularly pointed out in the written description and claims hereof, as well as from the appended drawings.

The present disclosure relates to the use of oral compositions to be used as food supplements or alternatively comprised in food compositions, including complete food compositions, for preserving or improving mental health in canine. These oral compositions are also termed "food compositions" herein, although these are not complete food compositions *per se.*

A first aspect of the present disclosure relates to the use of a food composition including, in % by weight, i) at least about 0.05% of nucleotides and ii) at least about 0.1% of oligosaccharides, wherein said oligosaccharides can be selected from xylo-oligosaccharides (XOS), fructo-oligosaccharides (FOS), galacto-oligosaccharides (GOS), and combinations thereof, for preserving or improving mental health in canine.

According to an embodiment, the present disclosure relates to the use of a food composition including, in % by weight, i) at least about 0.05% of nucleotides and ii) at least about 0.1% of oligosaccharides, wherein said oligosaccharides can be selected from xylo-oligosaccharides (XOS), fructo-oligosaccharides (FOS), galacto-oligosaccharides (GOS), and combinations thereof, for preserving or improving cognitive functions in canine

According to an embodiment, the present disclosure relates to the use of a food composition including, in % by weight, i) at least about 0.05% of nucleotides and ii) at least about 0.1% of oligosaccharides, wherein said oligosaccharides can be selected from xylo-oligosaccharides (XOS), fructo-oligosaccharides (FOS), galacto-oligosaccharides (GOS), and combinations thereof, for preserving or improving coping mechanisms in canine

Another aspect of the present disclosure relates to the use of the said food composition, including, in % by weight, i) from about 0.05% to about 0.5% of nucleotides, and ii) from about 0.1% to about 2% of oligosaccharides, wherein said oligosaccharides can be selected from xylo-oligosaccharides (XOS), fructo-oligosaccharides (FOS), galacto-oligosaccharides (GOS), and combinations thereof, for preserving or improving mental health in canine.

According to an embodiment, the present disclosure relates to the use of the said food composition, including, in % by weight, i) from about 0.05% to about 0.5% of nucleotides, and ii) from about 0.1% to about 2% of oligosaccharides, wherein said oligosaccharides can be selected from xylo-oligosaccharides (XOS), fructo-oligosaccharides (FOS), galacto-oligosaccharides (GOS), and combinations thereof, for preserving or improving cognitive functions in canine.

According to an embodiment, the present disclosure relates to the use of the said food composition, including, in % by weight, i) from about 0.05% to about 0.5% of nucleotides, and ii) from about 0.1% to about 2% of oligosaccharides, wherein said oligosaccharides can be selected from xylo-oligosaccharides (XOS), fructo-oligosaccharides (FOS), galacto-oligosaccharides (GOS), and combinations thereof, for preserving or improving coping mechanisms in canine.

Another aspect of the present disclosure relates to the use of the said food composition, including, in % by weight:
(i) from about 0.05% to about 0.5% of nucleotides;
(ii) from about 0.1% to about 0.7% of xylo-oligosaccharides (XOS), and/or
(iii) from about 0.3% to about 1% of fructo-oligosaccharides.

In some embodiments of the food composition, the nucleotides can be from a source of nucleotides selected from a yeast extract or a fraction thereof; in particular a yeast extract selected from a *Kluyveromyces* yeast extract or a *Saccharomyces cerevisae* yeast extract, or a fraction thereof.

In some embodiments of the food composition, the said nucleotides include a combination of pyrimidines and purines.

In some embodiments of the food composition, the said oligosaccharides can be selected from xylo-oligosaccharides (XOS), fructo-oligosaccharides (FOS), and combinations thereof.

In some embodiments of the food composition, the said XOS can include XOS composed of xylose units linked by β-(1,4) bonds, with a degree of polymerization (DP) from 2 to 10; and said FOS can include at least about 50% of short-chain fructo-oligosaccharides (scFOS) in % by weight of the FOS in the food composition on dry matter basis.

In some embodiments, the said food composition further can include :
- from about 0.01% to about 0.1% of vitamin E, in % by weight; and/or
- from about 0.0001% to about 0.001% of beta-carotene, in % by weight; and/or
- from about 0.1 % to about 10% of arginine, in % by weight.

In some embodiments, the food composition can be a dry composition, a wet composition, or a semi-moist composition, in particular a dry composition.

In some embodiments, the said food composition is for use for improving mental health, such as cognitive functions and coping mechanisms, in puppies.

In some embodiments, the said food composition is for use for improving or preserving mental health, such as cognitive functions and coping mechanisms, in adult canine.

In some embodiments, the said food composition is for use for preserving mental health, such as cognitive functions and coping mechanisms, in the aged canine.

Another aspect of the present disclosure relates to the use of a kit for manufacturing a food composition for preserving or improving mental health, such as cognitive functions and coping mechanisms, in canine, including:
(i) a source of nucleotides;
(ii) a source of oligosaccharides selected from xylo-oligosaccharides (XOS), fructo-oligosaccharides (FOS), galacto-oligosaccharides (GOS), and combinations thereof.

Another aspect of the present disclosure relates to a method of manufacturing the said food composition for preserving or enhancing mental health, such as cognitive functions and coping mechanisms, in canine, including:
a) mixing
   - a source nucleotides;
   - a source of oligosaccharides selected from xylo-oligosaccharides (XOS), fructo-oligosaccharides (FOS), galacto-oligosaccharides (GOS), and combinations thereof;
b) heating the mixture, thereby manufacturing the food composition.

Another aspect of the present disclosure relates to a method for preserving or improving mental health of a canine, the method including: (a) providing a food composition including at least, in % by weight, i) at least about 0.05% of nucleotides and ii) at least about 0.1% of oligosaccharides, wherein said oligosaccharides can be selected from xylo-oligosaccharides (XOS), fructo-oligosaccharides (FOS), galacto-oligosaccharides (GOS), and combinations thereof; and (b) administering to the canine animal an effective amount of the said food composition.

In an embodiment, the present disclosure relates to a method for preserving or improving cognitive functions of a canine, the method including: (a) providing a food composition including at least, in % by weight, i) at least about 0.05% of nucleotides and ii) at least about 0.1% of oligosaccharides, wherein said oligosaccharides can be selected from xylo-oligosaccharides (XOS), fructo-oligosaccharides (FOS), galacto-oligosaccharides (GOS), and combinations thereof; and (b) administering to the canine animal an effective amount of the said food composition.

In an embodiment, the present disclosure relates to a method for preserving or improving coping mechanisms of a canine, the method including: (a) providing a food composition including at least, in % by weight, i) at least about 0.05% of nucleotides and ii) at least about 0.1% of oligosaccharides, wherein said oligosaccharides can be selected from xylo-oligosaccharides (XOS), fructo-oligosaccharides (FOS), galacto-oligosaccharides (GOS), and combinations thereof; and (b) administering to the canine animal an effective amount of the said food composition.

In some embodiments, the use of the said food composition can be for preserving or improving mental health, such as cognitive functions and coping mechanisms, in puppies.

In some embodiments, the use of the said food composition can be for preserving or improving mental health, such as cognitive functions and coping mechanisms, in adult canine animals.

In some embodiments, the use of the said food composition can be for preserving or improving mental health, such as cognitive functions and coping mechanisms, in aged canine animals.

It is to be understood that both the foregoing general description and the following detailed description are exemplary and explanatory only and are not restrictive of the disclosed embodiments, as claimed.

### DETAILED DESCRIPTION OF THE DISCLOSURE

Although some oligosaccharides such as xylo-oligosaccharides (XOS) and short-chain fructo-oligosaccharides (scFOS), and nucleotides, are thought to have a positive effect on health, separately and independently on the gut health, their combinatorial use has not been studied yet in animals.

The present disclosure describes for the first time *in vivo* clinical studies reporting the combinatory effect of a nucleotide source, and of an oligosaccharide source, said oligosaccharide being selected from xylo-oligosaccharides (XOS), fructo-oligosaccharides (FOS), galacto-oligosaccharides (GOS), and combinations thereof, on the mental health, such as cognitive functions and coping mechanisms, of canine animals.

This proof of efficacy demonstrates the potential for a combination of (i) nucleotides and (ii) oligosaccharides selected from xylo-oligosaccharides (XOS), fructo-oligosaccharides (FOS), galacto-oligosaccharides (GOS) to impact positively mental health of a canine directly, especially of puppies.

In particular, it is reported herein the effect of this combination of active ingredients in canine animals, especially in puppies, for preserving or improving mental health including cognitive functions, coping mechanisms or a combination thereof.

As it is shown in the examples, a food composition comprising the combination of ingredients disclosed herein positively affect the canine mental health, which include cognitive functions and coping mechanisms, which can further include without limitation the animal's temperament and reaction to stimuli, the executive functions and memory, as well as its social behaviour and interaction. As it is shown in the examples, a food composition including the combination of ingredients disclosed herein positively affect the canine cognitive functions, which is demonstrated herein through a plurality of cognitive and coping mechanism tests which include (i) warmup trials, (ii) pointing gesture trial, (iii) vocal during memory tests, (iv) novel object bold trial and (v) surprising events: reactive and fearful trials.

### Definitions

The terms used in this specification generally have their ordinary meanings in the art, within the context of this subject matter and in the specific context where each term is used. Certain terms are defined below to provide additional guidance in describing the compositions and methods of the disclosed subject matter and how to make and use them.

As used herein, the singular forms "**a**", "**an**", and "**the**" include plural referents unless the context clearly dictates otherwise. Thus, for example, reference to "a compound" includes mixtures of compounds.

As used herein, the terms "**include**", "**including**", "**comprises**", "**comprising**" or any other variation thereof, are intended to cover a non-exclusive inclusion, such that a process, method, article, or apparatus that includes a list of elements does not include only those elements but can include other elements not expressly listed or inherent to such process, method, article, or apparatus.

The term "**about**" or "**approximately**" means within an acceptable error range for the particular value as determined by one of ordinary skill in the art, which will depend in part on how the value is measured or determined, *i.e.*, the limitations of the measurement system. For example, "about" can mean within three or more than three standard deviations, per the practice in the art. Alternatively, "about" can mean a range of up to 20%, preferably up to 10%, more preferably up to 5%, and more preferably still up to 1% of a given value. Also, particularly with respect to systems or processes, the term can mean within an order of magnitude, preferably within five-fold, and more preferably within two-fold, of a value.

Moreover, the terms "**at least**", and "**ranging from**", encompass the hereafter cited value. For example, "at least 40 ppm" has to be understood as also encompassing "40 ppm". Unless specifically stated otherwise, amounts (in particular weight percentages, amount in parts per million (ppm), or milliequivalents/kg (mEq/kg) fat) are expressed herein by weight of a product or composition reference, for example a preservative food composition according to the disclosure. In the present disclosure, ranges are stated in shorthand, so as to avoid having to set out at length and describe each and every value within the range. Any appropriate value within the range can be selected, where appropriate, as the upper value, lower value, or the terminus of the range. For example, a range from 1 to 10 represents the terminal values of 1 and 10, as well as the intermediate values of 2, 3, 4, 5, 6, 7, 8, 9, and all intermediate ranges encompassed within 1-10, such as 2 to 5, 2 to 8, 7 to 10, etc.

In the description herein, references to "**embodiments**," "an **embodiments**," "**one embodiment**," "**in various embodiments**," etc., indicate that the embodiment(s) described can include a particular feature, structure, or characteristic, but every embodiment might not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

As used herein, the term "**canine**" or "**canine animal**" encompasses animals, including pet animals selected in the group including recognized dog breeds (some of which are further subdivided), which can include afghan hound, airedale, akita, Alaskan malamute, basset hound, beagle, Belgian shepherd, bloodhound, border collie, border terrier, borzoi, boxer, bulldog, bull terrier, cairn terrier, chihuahua, chow, cocker spaniel, collie, corgi, dachshund, dalmatian, doberman, English setter, fox terrier, German shepherd, golden retriever, great dane, greyhound, griffon bruxellois, Irish setter, Irish wolfhound, King Charles spaniel, Labrador retriever, lhasa apso, mastiff, newfoundland, old English sheepdog, papillion, pekingese, pointer, pomeranian, poodle, pug, rottweiler, St. Bernard, saluki, samoyed, schnauzer, Scottish terrier, Shetland sheepdog, shih tzu, Siberian husky, Skye terrier, springer spaniel, West Highland terrier, whippet, Yorkshire terrier, etc.

As used herein, the terms "**puppy**" or "**puppies**" refer to dogs at an early stage of their development, especially to dogs from the birth to beginning of the adulthood, such as typically from birth to about 8 to 24 months old, depending on the breed and expected adult weight. In some preferred embodiments, a puppy can be less than about 6 months old.

As used herein, the terms **"adult"** and **"adult canine"** may be used interchangeably herein and mean a canine animal which has passed puberty and reaches its biological maturation point.

As used herein, the terms "**aged**", "**aged canine**" and "**aged canine animals**" may be used interchangeably herein and mean a canine animal which has exceeded 70 % of the average lifespan for its particular species and/or breed within a species. For example, if the average lifespan for a given breed of dogs is 10 years, then a dog within that breed greater than **7 years** would be considered as "aged" for purposes herein.

As used herein, the term "**healthy aging**" canine are those with no known diseases relating to loss of cognitive impairment.

As used herein, the term "**mental health**" or "**mental status**" refers to a state of mental well-being that enables a subject to cope with the stresses of life, to realize its abilities, to learn well and work well, and to contribute to its community. It is an integral component of health and well-being that underpins individual and collective abilities to make decisions, build relationships. Mental health includes emotional, psychological, and social well-being. It can affect how to think, feel, learn and act (generally referred as "cognitive functions"). It can also help to determine how to handle stress, relate to others, and make choices (generally referred to "coping mechanism"). According to the disclosure, mental health includes, without being limited to, cognitive functions, coping mechanisms and their combination.

As used herein, the term "**cognitive function**" or "**cognitive functions**" refers to any intellectual brain process or brain state involved in learning and/or memory including, but not limited to, attention, understanding, awareness, reasoning, judgment, intuition, information acquisition, information processing, working memory, short-term memory, long-term memory, anterograde memory, retrograde memory, memory retrieval, discrimination learning, decision-making, inhibitory response control, attentional set-shifting, delayed reinforcement learning, reversal learning, the temporal integration of voluntary behavior, and expressing an interest in one's surroundings and self-care.. Cognitive functions of a canine animal may be assessed according to any method known in the art, including using a T maze or any other mazes in which the animals use spatial information. Other tests known in the art may also be used to assess cognitive function, such as problem-solving tasks, novel object recognition and odor recognition tasks. Cognitive function may also be measured using imaging techniques such as Positron Emission Tomography (PET), functional magnetic resonance imaging (fMRI), Single Photon Emission Computed Tomography (SPECT), or any other imaging technique that allows one to measure brain function. In animals, cognitive function may also be measured with electrophysiological techniques. In a particular embodiment, cognitive function may be assessed according to one or more of the cognitive tests disclosed in the present specification.

As used herein, the term **"coping mechanism"** or **"coping mechanisms"** refers to any intellectual brain process or brain state involved in the response, reaction, behavior adaptation or management of a subject to a given situation, stimulation or any physiological and/or psychological stress. Coping mechanism can vary, for example, according to individual own experience, early exposure and cognitive functions that will impact not only the perception of potential stressful events and the physiological and behavioral answer to it.

As used herein, the term **"preserving mental health"** of a canine animal refers to preventing, reducing or delaying a decline in the mental health of the said canine animal. Determining preservation of the mental health of a canine may be performed by any method known in the art, and especially by one or more of the cognitive and coping mechanism tests disclosed in the present specification.

As used herein, the term **"preserving cognitive functions"** of a canine animal refers to preventing, reducing or delaying a decline in cognitive functions of the said canine animal. Determining preservation of the cognitive functions of a canine may be performed by any method known in the art, and especially by one or more of the cognitive tests disclosed in the present specification.

As used herein, the term "**preserving coping mechanisms"** of a canine animal refers to preventing, reducing or delaying a decline in coping mechanisms of the said canine animal. Determining preservation of the coping mechanisms of a canine may be performed by any method known in the art, and especially by one or more of the coping mechanism tests disclosed in the present specification.

As used herein, the term **"improving mental health"** of a canine animal refers to an improvement of a process or condition related to the mental health as compared to a control canine animal. For example, a test whether a test food composition enhanced the mental health of a canine includes assessing the mental health of a said canine fed with the said test food composition and comparing them with the mental health of a canine of the same age range that have been fed with a control food composition. Determining enhancement of the mental health of a canine may be performed by any method known in the art, and especially according to one or more of the cognitive and coping mechanism tests disclosed in the present specification.

As used herein, the term **"improving cognitive functions"** of a canine animal refers to an improvement of a process or condition related to the cognitive functions as compared to a control canine animal. For example, a test whether a test food composition enhanced the cognitive functions of a canine includes assessing the cognitive functions of a said canine fed with the said test food composition and comparing them with the cognitive functions of a canine of the same age range that have been fed with a control food composition. Determining enhancement of the cognitive functions of a canine may be performed by any method known in the art, and especially according to one or more of the cognitive tests disclosed in the present specification.

As used herein, the term **"improving coping mechanisms"** of a canine animal refers to an improvement of a process or condition related to the coping mechanisms as compared to a control canine animal. For example, a test whether a test food composition enhanced the coping mechanisms of a canine includes assessing the coping mechanisms of a said canine fed with the said test food composition and comparing them with the coping mechanisms of a canine of the same age range that have been fed with a control food composition. Determining enhancement of the coping mechanisms of a canine may be performed by any method known in the art, and especially according to one or more of the coping mechanism tests disclosed in the present specification.

The term **"ppm"** or **"parts per million"** is used herein according to its conventional meaning. More precisely, it refers herein to a weight amount relative to the total weight of the preservative food composition, or of the animal food product including the preservative food composition (mg/kg) (unless otherwise indicated).

As used herein, unless specifically provided otherwise, the term "**% by weight"** or **"% in weight"** means the % by weight of the food composition on dry matter basis.

As used herein, the term **"preventing"** can also encompass the reduction of a likelihood of occurrence, or of re-occurrence of a condition.

As used herein, the term **"effective amount"** refers to an amount of an ingredient which, when included in a composition, is sufficient to achieve an intended compositional or physiological effect. It is understood that various biological factors can affect the ability of a substance to perform its intended task. Therefore, an "effective amount" can be dependent in some instances on such biological factors. Further, while the achievement of physiological effects can be measured by a skilled personnel using evaluations known in the art, it is recognized that individual variation can make the achievement of physiological effects a subjective decision. The determination of an effective amount is well within the ordinary skill in the art of nutritional sciences.

As used herein, **"administration",** and **"administering"** refer to the manner in which a composition is presented to a subject. Most preferably herein, administration of a food composition can be accomplished by an oral method.

As used herein, "**oral administration**" refers to a route of administration that can be achieved notably by swallowing or sucking a food composition.

As used herein, a "**food composition**" refers to any molecules or substances, or combinations of blends thereof, that can be added to food products, including beverages, to prevent undesirable chemical changes. Food compositions disclosed herein can be dry or wet food. In particular, animal food products food compositions can be dry animal food products or dry food compositions.

As used herein, the term "**nutritionally complete**" refers to animal food products that contain all known required nutrients for the intended recipient of the animal food product, in all appropriate amounts and proportions based, for example, on recommendations of recognized and competent authorities in the field of animal nutrition. Such foods are therefore capable of serving as a source of dietary intake to maintain life, without the addition of supplemental nutritional sources.

As used herein, the term "**functional food**" refers to a food product which provides nutritional components that are important for health maintenance. These food compositions contain compounds that are biologically active or bioavailable, such as probiotics, amino acids, multivitamins, and antioxidants, and often are found to be useful for the treatment of disease and disorders or the maintenance of normal health states. Functional food can include, for example, functional nutritionally complete food and functional complement.

As used herein, the terms "**dry animal food product**" or "**dry food composition**" generally refer to a food product or composition having a moisture content of less than about 12% by weight, and commonly even less than about 7% by weight. Dry animal food products can be formed by an extrusion process. In some embodiments, a dry animal food product can be formed from a core and a coating to form a dry animal food product that is coated, also called a coated dry animal food product. It should be understood that when the term "dry animal food product" is used, it can refer to an uncoated dry animal food product or a coated dry animal food product. A dry animal food composition can be a kibble.

As used herein, the term "**kibble**" includes a particulate pellet like component of animal feeds, such as dog and cat feeds, typically having a moisture, or water, content of less than about 12% by weight, relative to the total weight of the kibble. Kibbles can range in texture from hard to soft. Kibbles can range in internal structure from expanded to dense.

As used herein, the term "**core**", or "**core matrix**", means the particulate pellet of a dry animal food product, *i.e.* a kibble, and is typically formed from a core matrix of ingredients. The particulate pellet can be coated to form a coating on a core, which can be a coated dry animal food product. The core can be without a coating or can be with a partial coating. In an embodiment without a coating, the particulate pellet can include the entire dry animal food product. Cores can include farinaceous material, proteinaceous material, and mixtures and combinations thereof. In one embodiment, the core can include a core matrix of protein, carbohydrate, and fat.

As used herein, the term **"coating"** means a partial or complete covering, typically on a core, that covers at least a portion of a surface, for example a surface of a core. In one example, a core can be partially covered with a coating such that only part of the core is covered, and part of the core is not covered and is thus exposed. In another example, the core can be completely covered with a coating such that the entire core is covered and thus not exposed. Therefore, a coating can cover from a negligible amount up to the entire surface. In an embodiment, a food composition of the disclosure can be suitable for the preparation of a dry animal food product by coating.

As used herein, the terms **"wet animal food product"** or **"wet food composition"** generally refer to a food product or composition having a moisture content of higher than about 12% by weight, and commonly even higher than about 30% by weight.

As used herein, the term **"semi-moist food"** or **"semi-moist food composition"** or **"semi-moist food product"** particularly refers to a food composition with an intermediate moisture content of about 12% to about 30% in weight. Hence, such semi-moist food composition is generally the final product of a process allowing a moisture content value that is intermediate between a dry food and a wet food. In some embodiments, the said process can include a step of adding a humectant agent. In some embodiments, the said process includes an extrusion step and a subsequent treatment step with Super-Heated Steam (SHS). In some embodiments, the semi-moist food according to the present disclosure containing more than about 12% and at most about 30% moisture by weight Illustratively, a semi-moist food composition has about 11% to about 25% moisture by weight.

As used herein, an **"extrudate"** refers to any product, such as an animal food product, which has been processed by, such as by being sent through, an extruder or pelleting process. An extrudate can be dry or wet. Preferably, an extrudate is a dry extruded product. In a particular embodiment, an extruded product is a dry animal food product, in particular a kibble. In one embodiment of extrusion, kibbles can be formed by an extrusion process wherein raw materials, including starch, can be extruded under heat and pressure to gelatinize the starch and to form the pelletized kibble form, which can be a core. Any type of extruder can be used, non-limiting examples of which include single screw extruders and twin-screw extruders.

As used herein, the term "**protein source**" can encompass "**animal protein sources**", "**plant protein sources**", or any other amino acid source, or combinations thereof. According to some embodiments, the protein source can include or can consist of hydrolyzed proteins; e.g. partially or totally hydrolyzed proteins. Methods to hydrolyze, partially or totally proteins are well-known. A hydrolysate can be produced by any known chemical or enzymatic method, such as, in non-limiting example, methods disclosed in US 5,589,357, US 4,879,131, US 5,039,532 or EP 1 236 405 B1, incorporated herein by reference. According to some embodiments, the protein source is not hydrolyzed.

As used herein, the term "**amino acid**" can refer to any naturally-occuring or non-naturally-occuring amino acid. In a non-exhaustive manner, the amino acid can be selected from Alanine, Arginine, Asparagine, Aspartate, Cysteine, Glutamate, Glutamine, Glycine, Histidine, Isoleucine, Leucine, Lysine, Methionine, Phenylalanine, Proline, Serine, Taurine, Threonine, Tryptophan, Tyrosine, and Valine or a combination thereof.

As used herein, the term "**amino acid source**" means a material containing amino acids. Said amino acid source can include or be derived from, but is not limited to, plant proteins, animal proteins, proteins from single cell organisms and free amino acids.

As used herein, the term "**animal protein**" refers to animal-based sources of protein. Such animal protein includes, for example without limitation, meat (for example, pork, beef, or veal), poultry (for example, chicken), fish, organs (for example, liver, spleen, or heart), viscera (for example, viscera of chicken or pork), and combinations thereof. As animal proteins, one can select, in a non-exhaustive manner, animal proteins from poultry, beef, chicken, chicken meal, lamb, lamb meal, dried egg, fish, fish meal, meat and bone meal, meat byproducts, meat meal, turkey, blood plasma or bone marrow.

As plant or vegetal proteins, one can select, in a non-exhaustive manner, vegetal proteins from soybean, chickpea, pea, corn gluten, rice, insects, lentils, or barley.

As used herein, the term "**antioxidant**" refers to any molecule, composition or products which delays or prevents the oxidation of an animal food product, and in particular of an oxidizable fat. Antioxidant food compositions or products of the present disclosure can prevent or delay the oxidation process. Further, antioxidants can preserve fresh attributes and nutritional quality of the corresponding food composition or product. Antioxidants of the present disclosure can include or can consist of synthetic or natural antioxidants. Advantageously, food compositions or products can include lesser amounts of synthetic antioxidants. According to some embodiments, such antioxidant food compositions can include minimal, or undectable, amounts of synthetic antioxidants. For example, such antioxidant food compositions can include synthetic antioxidants in amounts less than about 1% in weight of the total weight of the corresponding composition. Advantageously, the antioxidants which can be present in such food compositions, or products, consist exclusively of non-synthetic (*i.e.* natural) antioxidants.

As used herein, the term "**synthetic antioxidant**" refers to chemically synthesized, non-naturally occurring, compounds which can be added to food as preservatives to help prevent lipid oxidation. In a non-exhaustive manner, this term thus encompasses the following compounds: Butylated hydroxytoluene (BHT), butylated hydroxyanisole (BHA), TBHQ (tert-butylhydroxyquinone), propyl gallate (PG), dodecyl gallate (DG), octylgallate (OG) and chelating agent, such as ethylenediaminetetraacetic acid (EDTA).

As used herein, the term "**natural antioxidant**" refers to naturally-occurring compounds with antioxidant properties.

The "**antioxidant**" properties of a given product or composition of the present disclosure can be assessed by determining its ability to delay or prevent the oxidation of a molecule such as a lipid, lipoprotein, protein or DNA, over a given length of time.

As used herein, the term "**fat**" refers to the total amount of digestible, partially digestible and nondigestible fats or oils that are present in the embodiments of the present disclosure; especially the food products or compositions for which fat oxidation should be prevented or delayed. As used herein, the terms "**lipid**", "**fat**" and "**oil**" are synonymous.

The constituents of oils and fats are known in chemistry to possess a tendency to absorb and react with oxygen. The development of rancidity results primarily from the products formed during oxidation. The dissolved or absorbed oxygen usually reacts first to form peroxides. The development of peroxides is accelerated by moisture, heat, light or catalysts. Aldehydes, ketones and acids of lower molecular weight are formed in the further decomposition and these materials impart an undesirable odor and taste to the oil or fat.

For quality assessment, methods known by the skilled person, such as peroxide value determination (PV), hexanal value determination, ferric thiocyanate method (FTC), thiobarbituric acid method (TBA), anisidine index determination, conjugated dienes determination, or any method for determining the stability such as oxygen bomb or rancimat. According to a preferred embodiment, the determination of major primary products *(i.e.* hydroperoxides) resulting from lipid oxidation, as well as secondary compounds (including alkanes, alkenes, aldehydes, ketones, alcohols, esters, acids and hydrocarbons) can thus be used to assess antioxidant properties. In a non-exhaustive manner, those antioxidant properties can thus be assessed by determining a "peroxide value" (PV), or an "hexanal value".

As used herein "**peroxide value**" (PV) refers to the marker for fatty acids primary oxidation degradation compounds. Otherwise said, PV is used for the quantification of primary fat-oxidation products. Peroxide values of fresh food products are less than about 10 milliequivalents/kg (mEq/kg) whereas when the peroxide value is between about 20 and about 40 mEq/kg, the food product is considered rancid. According to a preferred embodiment, these values must be determined at end of shelf-life. According to an embodiment, a value up to 10 mEq/kg will be considered as rancid. Methods to analyze the PV of an animal food product are well known by the skilled person. Illustratively, the skilled person can use the NF EN ISO 3960 (Version of April 2017).

As used herein "**hexanal value**" refers to the marker for fatty acids second oxidation degradation compounds. Hexanal values of fresh food products are less than about 15 ppm whereas when the hexanal value is between about 15 and about 40 ppm, the food product is considered rancid. According to a preferred embodiment, these values have also to be determined at end of shelf-life. According to an embodiment, a value up to about 15 ppm will be considered as rancid. Methods to analyze the hexanal level of an animal food product are well known by the skilled person. Illustratively, the skilled person can use the AOCS method Cg 4-94 (AOCS. 1997).

As used herein, and unless specified otherwise, the term "**nucleotides**" can refer in particular to 5' nucleotides, which are nucleotides with a phosphoric acid group in the 5'-position of ribose. A "nucleotide" is preferably understood to be a subunit of deoxyribonucleic acid ("DNA") or ribonucleic acid ("RNA"). Such 5'nucleotides can, for instance, be obtained through treatment of a starting material with 5' nucleotidases and/or phosphatases. In a non-exhaustive manner, a 5'nucleotide according to the present disclosure can thus be selected from adenosine monophosphate (AMP), guanosine monophosphate (GMP), inosine monophosphate (IMP), uridine monophosphate (UMP), cytidine monophosphate (CMP), thymidine monophosphate (TMP), xanthosine monophosphate (XMP) or a mixture of two or more thereof. For example, the nucleotide can be AMP, GMP, or IMP or a mixture thereof, or the nucleotide can be GMP alone, or IMP alone, or a mixture thereof.

As used herein, and unless specified otherwise, the term "**nucleotide source**" refers to any source, in particular natural source, natural, processed or provided as raw material which contains nucleotides as defined above. For example, a nucleotide source suitable for the present disclosure can be hydrolyzed; e.g. partly or completely hydrolyzed. For example, a nucleotide source suitable for the present disclosure can include or can consist of a biological extract such as a bacterial extract or a yeast extract source of nucleotides. In a non-exhaustive manner, the yeast can be selected from *Kluyveromyces* or *Saccharomyces cerevisiae.* Examples of such nucleotide sources can thus include or can consist of petMOD^{™} and/or petMOD^{™}S feed material sources, which are commercialized by PROSOL S.P.A.. Quality Control of Yeast Extract Nucleotides can be achieved by any method known in the Art, such as ion-pair high-performance liquid chromatography.

Also, as used herein, the term **"polynucleotide"** refers to a polymeric form of nucleotides of any length, either ribonucleotides or deoxynucleotides, and includes both double- and single-stranded DNA and RNA. Accordingly, the terms "nucleotide" and "5'nucleotide" are used throughout the specification distinctly from polynucleotides.

As used herein, and unless specified otherwise, the term **"oligosaccharide"** refers to a compound containing two or more monosaccharide units linked by glycosidic bonds. Accordingly, it can refer to all types of oligosaccharides, such as those found from natural and synthetic sources, including those susceptible to be obtained through microorganisms.

In the context of the present disclosure, and especially, the food compositions and products according to the present disclosure, the oligosaccharides which can be considered include those selected from: a gluco-oligosaccharide, a galacto-oligosaccharide, a fructo-oligosaccharide, a manno-oligosaccharide, an arabino-oligosaccharide, a xylo- oligosaccharide, or any combinations thereof.

Examples of oligossacharides can further include functionalized oligosaccharides. Functionalized oligosaccharide compositions can be produced by, for example, combining one or more sugars with one or more functionalizing compounds in the presence of a catalyst.

More particularly, especially in the context of a combination with nucleotides, the oligosaccharides which are specifically considered are those selected from: a galacto-oligosaccharide (GOS), a fructo-oligosaccharide (FOS), a xylo-oligosaccharide (XOS), or any combinations thereof.

The oligosaccharides according to the present disclosures can, in particular, be characterized based on the type of oligosaccharides present and/or the degree of polymerization (DP). The oligosaccharide content of reaction products resulting from polymerization can be determined, e.g., by a combination of high-performance liquid chromatography (HPLC) and spectrophotometric methods. For example, the average degree of polymerization (DP) for the oligosaccharides can be determined as the number average of species containing one, two, three, four, five, six, seven, eight, nine, ten to fifteen, and greater than fifteen, anhydrosugar monomer units

As used herein, the term "**long oligosaccharide**" refers to an oligosaccharide composition with an average degree of polymerization (DP) of about 8, about 9, about 10, about 11, about 12, about 13, about 14, about 15, about 16, about 17, about 18, about 19, or about 20.

As used herein, the term "**short oligosaccharide**" refers to an oligosaccharide with an average degree of polymerization (DP) of about 2, about 3, about 4, about 5, about 6, or about 7. In particular, the short oligosaccharide can refer to a short-chain fructo-oligosaccharide (scFOS). Examples of scFOS can thus include 1-kestose, nystose, 1F-β-fructofuranosyl nystose, or combinations thereof. For example, scFOS according to the present disclosure can include short-chain fructooligosaccharides (scFOS) obtained from sucrose; consisting of a combination of 1-kestose (GF2) (about 37%), nystose (GF3) (about 53%), and 1F-β-fructofuranosyl nystose (GF4) (about 10%). GF2, GF3, and GF4 are formed by a sucrose (glucose-fructose) molecule linked to respectively one, two or three fructose units added by β2-1 glycosidic linkages to the fructose unit of sucrose.

As used herein, and unless specified otherwise, the term "**arginine**" can refer to any arginine or arginine source, in particular any L-arginine or L-arginine source, which can be used i.e., synthetic or natural. Food ingredients which can include L-arginine in significant amounts can include for example nut meats, nut pastes, and/or nut flours, seeds, seed pastes, and/or seed flours, or gelatin. For example, L-arginine can be derived from any available arginine source, e.g., *Arachis hypogaea* (peanuts), *Juglans regia* (walnuts), *Prunus amygdalus* (almonds), *Corylus avellana* (hazelnuts), *Glycine max* (soybean), *Carya illinoensis* (pecans), *Amacardium occidentale* (cashews), *and Macadamia integrifolia, M. tetraphylla* (macadamia nuts) and the like.

### Food composition

Are provided herein food compositions for their use for preserving or improving mental health, such as cognitive functions and coping mechanisms, in a canine animal, including (i) improving mental health in puppies, (ii) improving or preserving mental health in adult canine animals and (iii) preserving mental health in aged canine animals.

According to an aspect, the food composition which is used in canine according to the present disclosure can include, in % by weight, **i)** at least about 0.05% of nucleotides and **ii)** at least about 0.1% of oligosaccharides, wherein said oligosaccharides can be selected from xylo-oligosaccharides (XOS), fructo-oligosaccharides (FOS), galacto-oligosaccharides (GOS), and combinations thereof.

According to some embodiments, the food composition which is used in canine according to the present disclosure can include, in % by weight, **i)** at least about 0.06%, 0.07%, 0.08%, 0.09%, 0.1%, 0.2%, 0.3%, 0.4%, or 0.5% of nucleotides and **ii)** at least about 0.1% of oligosaccharides, wherein said oligosaccharides can be selected from xylo-oligosaccharides (XOS), fructo-oligosaccharides (FOS), galacto-oligosaccharides (GOS), and combinations thereof.

According to some embodiments, the food composition which is used in canine according to the present disclosure can include, in % by weight , **i)** at least about 0.05% of nucleotides and **ii)** at least about 0.2%, 0.3%, 0.4%, 0.5%, 0.6%, 0.7%, 0.8%, 0.9% of oligosaccharides, wherein said oligosaccharides can be selected from xylo-oligosaccharides (XOS), fructo-oligosaccharides (FOS), galacto-oligosaccharides (GOS), and combinations thereof.

In certain embodiment, the recited compositions can be dry compositions.

According to some embodiments, the food composition which is used in canine according to the present disclosure can include, in % by weight, **i)** at least about 0.05% of nucleotides and **ii)** at least about 0.1% of oligosaccharides, wherein said oligosaccharides can be selected from xylo-oligosaccharides (XOS), fructo-oligosaccharides (FOS), and combinations thereof.

According to some embodiments, the food composition which is used in canine according to the present disclosure can include, in % by weight, **i)** at least about 0.05% of nucleotides and **ii)** at least about 0.1% of fructo-oligosaccharides (FOS).

According to some embodiments, the food composition which is used in canine according to the present disclosure can include, in % by weight, **i)** at least about 0.05% of nucleotides and **ii)** at least about 0.1% of xylo-oligosaccharides (XOS).

According to some embodiments, the food composition which is used in canine according to the present disclosure can include, in % by weight, **i)** at least about 0.05% of nucleotides and **ii)** at least about 0.1% of galacto-oligosaccharides (GOS).

In certain embodiments, the food composition which is used in canine according to the present disclosure can include, in % by weight, **i)** from about 0.05% to about 0.5%, of nucleotides and **ii)** from about 0.1% to about 2% of oligosaccharides, wherein said oligosaccharides can be selected from xylo-oligosaccharides (XOS), fructo-oligosaccharides (FOS), galacto-oligosaccharides (GOS), and combinations thereof.

In certain embodiments, the food composition which is used in canine according to the present disclosure can include, , in % by weight, **i)** from about 0.05% to about 0.5% of nucleotides, and **ii)** from about 0.1% to about 2% of oligosaccharides, wherein said oligosaccharides can be selected from xylo-oligosaccharides (XOS), fructo-oligosaccharides (FOS), and combinations thereof.

For example, the food composition which is used in canine according to the present disclosure can include, in % by weight, **i)** from about 0.05% to about 0.5% of nucleotides, and **ii)** from about 0.1% to about 2% of fructo-oligosaccharides (FOS).

For example, the food composition which is used in canine according to the present disclosure can include, in % by weight, **i)** from about 0.05% to about 0.5% of nucleotides, and **ii)** from about 0.1% to about 2% of xylo-oligosaccharides (XOS).

In certain embodiments, the food composition which is used in canine according to the present disclosure, can include, in % by weight:
**(i)** at least about 0.05% of nucleotides;
**(ii)** at least about 0.1% of xylo-oligosaccharides (XOS), and/or
**(iii)** at least about 0.3% of fructo-oligosaccharides (FOS).

According to some embodiments, the food composition which is used in canine according to the present disclosure, can include, in % by weight:
**(i)** at least about 0.05% of nucleotides;
**(ii)** at least about 0.1% of xylo-oligosaccharides (XOS), **and**
**(iii)** at least about 0.3% of fructo-oligosaccharides (FOS).

According to some embodiments, the food composition which is used in canine according to the present disclosure, can include, in % by weight:
**(i)** at least about 0.05% of nucleotides;
**(ii)** at least about 0.3% of fructo-oligosaccharides (FOS).

In certain embodiments, the food composition which is used in canine according to the present disclosure, can include, in % by weight:
**(i)** from about 0.05% to about 0.5% of nucleotides;
**(ii)** from about 0.1% to about 0.7% of xylo-oligosaccharides (XOS), **and/or**
**(iii)** from about 0.3% to about 1% of fructo-oligosaccharides (FOS).

According to some embodiments, the food composition which is used in canine according to the present disclosure, can include, in % by weight:
(i) from about 0.05% to about 0.5% of nucleotides;
(ii) from about 0.1% to about 0.7% of xylo-oligosaccharides (XOS).

According to some embodiments, the food composition which is used in canine according to the present disclosure, can include, in % by weight:
**(i)** from about 0.05% to about 0.5% of nucleotides;
**(ii)** from about 0.3% to about 1% of fructo-oligosaccharides (XOS).

In certain embodiments of the food composition which is used in canine according to the present disclosure, the nucleotides can be from a source of nucleotides from a yeast extract or a fraction thereof; in particular a yeast extract selected from a *Kluyveromyces* yeast extract and/or a *Saccharomyces cerevisae* yeast extract, or a fraction thereof.

In various embodiments of a food composition which is used according to the present disclosure, the said nucleotides can include a combination of pyrimidines and purines.

In various embodiments, in a food composition which is used according to the present disclosure, the said nucleotides can include a combination of pyrimidines and purines with a weight ratio of pyrimidines to purines ranging from about 9:1 to about 1:1.

According to some embodiments, the nucleotides can include a combination of pyrimidines and purines with a weight ratio of pyrimidines to purines ranging from about 9:1 to about 1:1; which includes without limitation 9:1, 8:1, 7:1, 6:1, 5:1, 4:1, 3:1, 2:1, 1:1.

In certain embodiments of a food composition which is used according to the present disclosure, the said nucleotides can include pyrimidines selected from cytidine monophosphate (CMP), uridine monophosphate (UMP), thymidine monophosphate (TMP), and/or combinations thereof.

In certain embodiments, in a food composition which is used according to the present disclosure, the said nucleotides can include purines selected from adenosine monophosphate (AMP), guanosine monophosphate (GMP), inosine monophosphate (IMP), xanthosine monophosphate (XMP), and/or combinations thereof.

In certain embodiments of a food composition which is used according to the present disclosure, the oligosaccharides can be selected from xylo-oligosaccharides (XOS), fructo-oligosaccharides (FOS), and/or combinations thereof.

Short-chain oligosaccharides and long-chain oligosaccharides can be considered according to the present disclosure.

In certain embodiments of a food composition which is used according to the present disclosure, the said oligosaccharides can include a number of saccharide units of at least 2 units; for example from 2 to 10, which thus can include 2, 3, 4, 5, 6, 7, 8, 9 or 10. Alternatively, said oligosaccharides can include a number of saccharide units of 10 or above 10.

In certain embodiments of a food composition which is used according to the present disclosure, the said XOS can include XOS composed of xylose units linked by β-(1,4) bonds, with a degree of polymerization (DP) from 2 to 10; which thus can include 2, 3, 4, 5, 6, 7, 8, 9 and 10.

In certain embodiments of a food composition which is used according to the present disclosure, the said XOS can include 2 to 7 xylose molecules linked by β-1,4 glycosidic bonds.

In certain embodiments of a food composition which is used according to the present disclosure, the said FOS can include at least about 50% of short-chain fructo-oligosaccharides (scFOS) in % by weight of the FOS in the food composition on dry matter basis.

In certain embodiments of a food composition which is used according to the present disclosure, the said FOS can include at least about 50%, 51%, 52%, 53%, 54%, 55%, 56%, 57%, 58%, 59%, 60%, 61%, 62%, 63%, 64%, 65%, 66%, 67%, 68%, 69%, 70%, 71%, 72%, 73%, 74%, 75%, 76%, 77%, 78%, 79%, 80%, 81%, 82%, 83%, 84%, 85% 86%, 87%, 88%, 89% or even 90% of short-chain fructo-oligosaccharides (scFOS) in % by weight of the FOS in the food composition on dry matter basis

In certain embodiments of a food composition which is used according to the present disclosure, the said scFOS can include scFOS with 2, 3or 4 fructose units linked to one glucose unit (also referred respectively as GF2, GF3 and/or GF4).

In certain embodiments of the food composition which is used according to the present disclosure, said XOS include XOS composed of xylose units linked by β-(1,4) bonds, with a degree of polymerization (DP) from 2 to 10; and said FOS include at least about 50% of short-chain fructo-oligosaccharides (scFOS) in % by weight of the FOS in the food composition on dry matter basis.

In certain embodiments, the food composition which is used according to the present disclosure can further include at least one ingredient selected from vitamin E, arginine and betacarotene. More particularly, the food composition which is used according to the present disclosure can further include at least two ingredients selected from vitamin E, arginine and betacarotene.

In certain embodiments, the food composition which is used according to the present disclosure can further include from about 0.01% to about 0.1% of vitamin E, in % by weight; which can include 0.01%, 0.02%, 0.03%, 0.04%, 0.05%, 0.06%, 0.07%, 0.08%, 0.09% and 0.1% in % by weight.

In certain embodiments, the food composition which is used according to the present disclosure can further include from about 0.0001% to about 0.001% of beta-carotene, in % by weight.

In certain embodiments, the food composition which is used according to the present disclosure can further include from about 0.1 % to about 10%, of arginine in % by weight; which includes 0.1%, 0.2%, 0.3%, 0.4%, 0.5%, 0.6%, 0.7%, 0.8%, 0.9%, 1%, 2%, 3%, 4%, 5%, 6%, 7%, 8%, 9% and 10% by weight.

In certain embodiments, the food composition which is used according to the present disclosure can further include:
- from about 0.01% to about 0.1% of vitamin E, in % by weight; which can include 0.01%, 0.02%, 0.03%, 0.04%, 0.05%, 0.06%, 0.07%, 0.08%, 0.09% and 0.1% in % by weight; **and/or**
- from about 0.0001% to about 0.001% of beta-carotene, in % by weight; **and/or**
- from about 0.1 % to about 10% of arginine, in % by weight; which includes 0.1%, 0.2%, 0.3%, 0.4%, 0.5%, 0.6%, 0.7%, 0.8%, 0.9%, 1%, 2%, 3%, 4%, 5%, 6%, 7%, 8%, 9% and 10% by weight.

In certain embodiments a food composition which is used according to the present disclosure can be a dry composition, a wet composition, or a semi-moist composition; such as a dry composition.

In certain embodiments a food composition which is used according to the present disclosure can be a nutritionally complete food or a functional complement.

### Preserving or improving canine mental health

As it is specified elsewhere herein, a food composition including the combination of ingredients disclosed herein positively affect the canine mental health, such as cognitive functions and coping mechanisms, which include the animal's temperament and reaction to stimuli, the executive functions and memory, as well as its social behaviour and interaction. As it is shown in the examples, a food composition including the combination of ingredients disclosed herein positively affect the canine mental health, which is demonstrated herein through a plurality of cognitive and coping mechanism tests which include (i) warmup trials, (ii) pointing gesture trial, (iii) vocal during memory tests, (iv) novel object bold trial and (v) surprising events : reactive and fearful trials.

The various canine cognitive trials performed herein are disclosed in more detail in the examples herein.

A food composition as disclosed herein is aimed at improving or preserving mental health in canine animals, which mental health can encompass one or more of canine's temperament, canine's reaction to stimuli, canine's social behaviour and interaction, notably interaction with human.

Most preferably, the said canine animals can be healthy canine animals, thus are canine animals that are not affected with any detectable pathological cognitive defect or mental disorders, *i.e.* which are not affected with any disease relating to any cognitive impairment or post traumatic stress disorder.

In some embodiments, a food composition as disclosed herein is aimed at improving mental health, such as cognitive functions and coping mechanisms, in puppies, which mental health encompass one or more of puppy's temperament, puppy's reaction to stimuli, puppy's social behaviour and interaction, notably interaction with human.

According to these embodiments, the present disclosure relates to the use of a food composition as disclosed herein for improving mental health in puppies.

According to these embodiments, the present disclosure relates to the use of a food composition as disclosed herein for improving cognitive functions in puppies.

According to these embodiments, the present disclosure relates to the use of a food composition as disclosed herein for improving coping mechanisms in puppies.

According to these embodiments, the present disclosure relates to a method for improving the mental health of puppies including a step of feeding puppies with a food composition described herein.

According to these embodiments, the present disclosure relates to a method for improving the cognitive functions of puppies including a step of feeding puppies with a food composition described herein.

According to these embodiments, the present disclosure relates to a method for improving the coping mechanisms of puppies including a step of feeding puppies with a food composition described herein.

As it is known in the art, it is desirable to preserve or enhance cognitive functions and/or coping mechanisms in adult canine animals.

In some other embodiments, a food composition as disclosed herein is aimed at preserving or improving mental health, such as cognitive functions and coping mechanisms, in adult canine animals, which mental health can encompass adult canine's temperament, adult canine's reaction to stimuli, adult canine's social behaviour and interaction, notably interaction with human.

According to these other embodiments, the present disclosure relates to the use of a food composition as disclosed herein for preserving or improving mental health in adult canine animals.

According to these other embodiments, the present disclosure relates to the use of a food composition as disclosed herein for preserving or improving cognitive functions in adult canine animals.

According to these other embodiments, the present disclosure relates to the use of a food composition as disclosed herein for preserving or improving coping mechanisms in adult canine animals.

According to these other embodiments, the present disclosure relates to a method for preserving or improving the cognitive functions of adult canine animals including a step of feeding the adult canine animals with a food composition described herein.

Further, it is also desirable to preserve mental health, such as cognitive functions and coping mechanisms, in aged canine animals, so as to prevent, reduce or delay a natural decline in mental health that may be observed in aged canine animal, including in healthy aging canine animals.

In some further embodiments, a food composition as disclosed herein is aimed at preserving mental health, such as cognitive functions and coping mechanisms, in aged canine animals, which mental health can encompass one or more of aged canine temperament, aged canine reaction to stimuli, aged canine social behaviour and interaction, notably interaction with human.

According to these further embodiments, the present disclosure relates to the use of a food composition as disclosed herein for preserving mental health in aged canine animals.

According to these further embodiments, the present disclosure relates to the use of a food composition as disclosed herein for preserving cognitive functions in aged canine animals.

According to these further embodiments, the present disclosure relates to the use of a food composition as disclosed herein for preserving coping mechanisms in aged canine animals.

According to these further embodiments, the present disclosure relates to a method for preserving the mental health of aged canine animals including a step of feeding aged canine animals with a food composition described herein.

According to these further embodiments, the present disclosure relates to a method for preserving the cognitive functions of aged canine animals including a step of feeding aged canine animals with a food composition described herein.

According to these further embodiments, the present disclosure relates to a method for preserving the coping mechanisms of aged canine animals including a step of feeding aged canine animals with a food composition described herein.

Most preferably, the aged canine animals can be healthy aging canine animals, i.e. aged canine animals which are not affected with any disease relating to a loss of cognitive functions nor with any cognitive impairment.

In certain embodiments, the present disclosure relates to a food composition as described herein, for its use in a method for improving mental health, such as cognitive functions and coping mechanisms, in a canine animal, which can encompass one or more of canine temperament, canine reaction to stimuli, canine social behaviour and interaction, notably interaction with human.

In addition, according to another aspect, the present disclosure relates to a nutritional use of a food composition as described herein, namely a food composition including, in % by weight, **i)** at least about 0.05% of nucleotides and **ii)** at least about 0.1% of oligosaccharides, wherein said oligosaccharides can be selected from xylo-oligosaccharides (XOS), fructo-oligosaccharides (FOS), galacto-oligosaccharides (GOS), and combinations thereof; for improving or preserving mental health in canine animals.

According to an embodiment, the present disclosure relates to a nutritional use of a food composition as described herein, namely a food composition including, in % by weight, **i)** at least about 0.05% of nucleotides and **ii)** at least about 0.1% of oligosaccharides, wherein said oligosaccharides can be selected from xylo-oligosaccharides (XOS), fructo-oligosaccharides (FOS), galacto-oligosaccharides (GOS), and combinations thereof; for improving or preserving cognitive functions in canine animals.

According to an embodiment, the present disclosure relates to a nutritional use of a food composition as described herein, namely a food composition including, in % by weight, **i)** at least about 0.05% of nucleotides and **ii)** at least about 0.1% of oligosaccharides, wherein said oligosaccharides can be selected from xylo-oligosaccharides (XOS), fructo-oligosaccharides (FOS), galacto-oligosaccharides (GOS), and combinations thereof; for improving or preserving coping mechanisms in canine animals.

In addition, according to another aspect, the present disclosure relates to a nutritional use of a food composition as described herein, namely a food composition including, in % by weight, **i)** at least about 0.05% of nucleotides and **ii)** at least about 0.1% of oligosaccharides, wherein said oligosaccharides can be selected from xylo-oligosaccharides (XOS), fructo-oligosaccharides (FOS), galacto-oligosaccharides (GOS), and combinations thereof; for improving mental health, including cognitive functions, coping mechanisms and combination thereof, in puppies.

In addition, according to another aspect, the present disclosure relates to a nutritional use of a food composition as described herein, namely a food composition including, in % by weight, **i)** at least about 0.05% of nucleotides and **ii)** at least about 0.1% of oligosaccharides, wherein said oligosaccharides can be selected from xylo-oligosaccharides (XOS), fructo-oligosaccharides (FOS), galacto-oligosaccharides (GOS), and combinations thereof; for improving or preserving mental health, including cognitive functions, coping mechanisms and combination thereof, in adult canine animals.

In addition, according to another aspect, the present disclosure relates to a nutritional use of a food composition as described herein, namely a food composition including, in % by weight, **i)** at least about 0.05% of nucleotides and **ii)** at least about 0.1% of oligosaccharides, wherein said oligosaccharides can be selected from xylo-oligosaccharides (XOS), fructo-oligosaccharides (FOS), galacto-oligosaccharides (GOS), and combinations thereof; for preserving mental health, including cognitive functions, coping mechanisms and combination thereof, in aged canine animals.

Moreover, according to another aspect, the present disclosure relates to a nutritional method including administering, to a canine animal, a food composition as described herein, namely a food composition including, in % by weight, **i)** at least about 0.05% of nucleotides and **ii)** at least about 0.1% of oligosaccharides, wherein said oligosaccharides can be selected from xylo-oligosaccharides (XOS), fructo-oligosaccharides (FOS), galacto-oligosaccharides (GOS), and combinations thereof; for improving or preserving mental health, including cognitive functions, copong mechanisms and combination thereof, in a canine animal.

In embodiments of the aspect above, the nutritional method can include administering the said food composition to a puppy for improving its mental health.

In embodiments of the aspect above, the nutritional method can include administering the said food composition to a puppy for improving its cognitive functions.

In embodiments of the aspect above, the nutritional method can include administering the said food composition to a puppy for improving its coping mechanisms.

In other embodiments, of the aspect above, the nutritional method can include administering the said food composition to an adult canine for improving or preserving its mental health.

In embodiments of the aspect above, the nutritional method can include administering the said food composition to a puppy for improving its cognitive functions.

In embodiments of the aspect above, the nutritional method can include administering the said food composition to a puppy for improving its coping mechanisms.

In still other embodiments of the aspect above, the nutritional method can include administering the said food composition to an aged canine for preserving its mental health.

In another aspect, the present disclosure provides a method for improving or preserving the mental health, in a canine animal, the method including: (a) providing a food composition including at least, in % by weight, i) at least about 0.05% of nucleotides and ii) at least about 0.1% of oligosaccharides, wherein said oligosaccharides can be selected from xylo-oligosaccharides (XOS), fructo-oligosaccharides (FOS), galacto-oligosaccharides (GOS), and combinations thereof; and (b) administering to the canine animal an effective amount of the said food composition.

In another aspect, the present disclosure provides a method for improving or preserving the cognitive functions in a canine animal, the method including: (a) providing a food composition including at least, in % by weight, i) at least about 0.05% of nucleotides and ii) at least about 0.1% of oligosaccharides, wherein said oligosaccharides can be selected from xylo-oligosaccharides (XOS), fructo-oligosaccharides (FOS), galacto-oligosaccharides (GOS), and combinations thereof; and (b) administering to the canine animal an effective amount of the said food composition.

In another aspect, the present disclosure provides a method for improving or preserving the coping mechanisms in a canine animal, the method including: (a) providing a food composition including at least, in % by weight, i) at least about 0.05% of nucleotides and ii) at least about 0.1% of oligosaccharides, wherein said oligosaccharides can be selected from xylo-oligosaccharides (XOS), fructo-oligosaccharides (FOS), galacto-oligosaccharides (GOS), and combinations thereof; and (b) administering to the canine animal an effective amount of the said food composition.

In embodiments of the aspect above, the nutritional method can include administering the said food composition to a puppy for improving its mental health.

In other embodiments, of the aspect above, the nutritional method can include administering the said food composition to an adult canine for improving or preserving its mental health.

In still other embodiments of the aspect above, the nutritional method can include administering the said food composition to an aged canine for preserving its mental health.

According to another aspect, it is disclosed herein a kit for manufacturing a food composition as described herein , including:
**(i)** a source of nucleotides;
**(ii)** a source of oligosaccharides selected from xylo-oligosaccharides (XOS), fructo-oligosaccharides (FOS), galacto-oligosaccharides (GOS), and combinations thereof.

Advantageously, the said kit can be provided in a manner, wherein the source of nucleotides and oligosaccharides can be mixed, and preferably, heated, in order to directly manufacture the food composition. In that regard, the skilled in the art will adapt the content of the respective sources in nucleotides and oligosaccharides with respect to the estimated final amount required in the food composition.

The kit can be adapted for use in a method for improving or preserving the mental health of a canine animal, as described elsewhere in the present disclosure.

According to various embodiments, is also disclosed herein a method of manufacturing a food composition, including:
a) mixing
   - a source nucleotides;
   - a source of oligosaccharides selected from xylo-oligosaccharides (XOS), fructo-oligosaccharides (FOS), galacto-oligosaccharides (GOS), and combinations thereof;
b) heating the mixture, thereby manufacturing the food composition

### EXAMPLES

The presently disclosed subject matter will be better understood by reference to the following Examples, which are provided as exemplary of the disclosure, and not by way of limitation. The materials and methods used in the examples are summarized below.

### Material & Methods

### A. Cohort of canine animals

Puppies of 3-4 weeks of age were divided into two groups, respectively (i) a first group of 26 puppies fed with the control diet and (ii) a second group of 27 puppies fed with the test diet, thus starting from weaning (3-4 weeks of age). Behavioral testing was performed once per puppy at approximately 8 weeks of age. The testing protocol is designed for two days per puppy.

### B. Compositions of the diets

### B.1. Control diet

The control diet has the following constitution : Protein: 33.0% (w/w), Fat content: 14.0% (w/w), Crude ash: 8.26% (w/w), Crude fibres: 2.19%. (w/w), Nutritional additives: Vitamin A: 16300 IU, Vitamin D3: 917 IU, Vitamin E : 118 mg, E4 (Copper): 13 mg, E6 (Zinc): 150 mg.

### 8.2. Test diet

The test diet has the following constitution : Protein: 33.0% (w/w), Fat content: 14.0% (w/w), Crude ash: 8.26% (w/w), Crude fibers: 2.19% (w/w), Nutritional additives: Vitamin A: 16400 IU, Vitamin D3: 920 IU, Vitamin E : 500 mg, E4 (Copper): 13 mg, E6 (Zinc): 150 mg.

The test diet further comprises a combination of i) nucleotides and ii) oligosaccharides (FOS, XOS) as described in the present disclosure.

### B. Assessment of cognitive functions

Most of the experimental trials performed for determining the canine's cognitive functions are derived from, or adapted from, the cognitive tests disclosed in Bray et al. (2020, Anim Behav, Vol. 166 : 193-206) and in Bray et al. (2021, Anim Cogn, Vol. 24(2) : 311-328).

Cognitive functions are more particularly assessed through one or more of the further described tests named "warm up trials", "pointing gesture" and "vocal memory test". The results of the latter, by starting from a 15 sec time period to a 20 sec time period (see in the results below) illustrate the subject's memory performances and thus fits with assessing cognitive functions.

Coping mechanisms are more particularly assessed through one or more of the further described "vocal memory test", "novel object bold" and "surprising events". The results of the "vocal memory test" is also related the subject's vocal behaviour and thus also fits with the coping mechanisms.

The **"warm up trials"** are aimed at determining the ability of a canine to choose baited location immediately after being shown the reward hidden in this location. Higher scores are worse and reflect a greater number of trials required to meet the criterion. According to "warm up trials", the subject is required to pass a warm-up criterion prior to completing any other tasks with cups. Warm-up trials ensure that the subjects are motivated to search for the reward and are also implemented to discourage side biases. These trials consist of three phases: (1) no-cup visible placement and free-form cup familiarization game, (2) one-cup alternating visible placement, and (3) two-cup visible placement.

According to this test, the result is determined according to the number of trials to criteria during warm ups in the second testing session. The canine animals are required to choose correctly on their first attempt in four out of five consecutive trials. For performing warm up trials, the skilled artisan can notably refer to Bray et al. (2020, Animal Behavior, Vol. 166C : 193-206) or to Bray et al. (2021, nim Cogn, Vol. 24 : 311-328).

According to **"pointing gesture"** trial, it is tested the ability to use a human pointing gesture to locate hidden food. Higher scores reflect greater use of communicative cues from humans. This task measures the canine's ability to use an arm-pointing gesture to find a hidden reward. The experimenter ostensively (preceded by verbally addressing and making eye contact with the canine) points with the contralateral arm, index finger extended, and gazes towards the baited location until the trial ends. Twelve test trials are conducted. According to a dependent measure, it is determined the proportion of trials that the canine's first choice is to the baited location, where a choice is defined as the canine physically touching the cup with the snout or a front paw.

According to this test, the result is determined according to the percentage of correct choices across all 12 pointing cue trials. For performing pointing gesture trials, the skilled artisan can notably refer to Hare et al. (1998, Evol Commun, Vol. 2 : 137-159) or to Milkosi et al. (1998, Anim Cogn, Vol. 1 : 113-121).

According to the **"vocal during memory test",** it is measured the ability of a canine to recall the location of a hidden treat after temporal delays of various lengths. Two opaque containers are placed in front of the canine. The experimenter then shows the canine a food reward and places it underneath one of the containers. A delay before the subject is allowed to search is imposed, which increases across blocks of six trials each (5 s,1 0 s, 15 s, 20 s). Only canine animals who choose correctly on at least four of six trials at 10 s move on to delays of 15 s, and only those who choose correctly on at least four of six trials at 15 s move on to delays of 20 s. According to a dependent measure, the proportion of trials that the subject first searched in the baited location. Thus, according to the "vocal during memory test", it is tested the ability to remember baited location after a delay of 5, 10, 15 then 20 seconds, vocalization was recorded during these trials (which sometimes prove frustrating to canine animals while they wait to search). According to the different phases of this test, it is performed.
(i) a vocalization during memory test with 10 seconds delay at average intensity. According to this test, the result is determined across 6 ten-second delay trials, the average intensity of the canine's vocalizations on the 0-4 scale: 0 = none ; 1 = groan; 2 = whine; 3 = bark/yelp; 4 = howl.
(ii) a vocalization during memory test with 10 seconds delay at maximal intensity.
   According to this test, the result is determined across 6 ten-second delay trials, the maximum intensity of the canine's vocalizations on the 0-4 scale: 0 = none ; 1 = groan; 2 = whine; 3 = bark/yelp; 4 = howl.
(iii) a vocalization during memory test with 15 seconds delay at average intensity.
   According to this test, the result is determined across 6 fifteen-second delay trials, the average intensity of the canine's vocalizations on the 0-4 scale: 0 = none ; 1 = groan; 2 = whine; 3 = bark/yelp; 4 = howl. NA= puppy did not meet criteria to continue to 15s trials (4 out of 6 correct on the preceding block of trials).
(iv) a vocalization during memory test with 15 seconds delay at maximal intensity.
   According to this test, the result is determined across 6 fifteen-second delay trials, the maximum intensity of the canine's vocalizations on the 0-4 scale: 0 = none ; 1 = groan; 2 = whine; 3 = bark/yelp; 4 = howl. NA= puppy did not meet criteria to continue to 15s trials (4 out of 6 correct on the preceding block of trials).
(v) a vocalization during memory test with 20 seconds delay at average intensity.
   According to this test, the result is determined across 6 twenty-second delay trials, the average intensity of the canine's vocalizations on the 0-4 scale: 0 = none ; 1 = groan; 2 = whine; 3 = bark/yelp; 4 = howl. NA= puppy did not meet criteria to continue to 20s trials (4 out of 6 correct on the preceding block of trials), and
(vi) a vocalization during memory test with 20 seconds delay at maximal intensity.
   According to this test, the result is determined across 6 twenty-second delay trials, the maximum intensity of the canine's vocalizations on the 0-4 scale: 0 = none ; 1 = groan; 2 = whine; 3 = bark/yelp; 4 = howl. NA= canine did not meet criteria to continue to 20s trials (4 out of 6 correct on the preceding block of trials).

For performing the vocal during memory test, the skilled artisan can notably refer to Dore et al. (1996, Anim Learn Behav, Vol. 24 : 142-149).

According to the **"novel object bold"** trial, it is measured the canine's reaction to an unfamiliar object, with methods adapted from previously published studies. A stuffed mechanical, motion-activated cat is placed inside the pen with the canine. The experimenter and handler exit the room, leaving the canine alone with the locomoting and vocalizing cat. After 2 min, the experimenter re-enters the room and encourages the canine to approach the cat. Finally, the handler re-enters the room and places the canine approximately 1 m in front of the cat, at which point the experimenter once again encourages the canine to approach. The subject's behaviour is scored from video using an ethogram including measures such as latency to approach, amount of time in proximity and contact, vocal behaviors, and approach willingness once the humans are back in the room. Thus, according to this trial, the canine is left alone for 2 minutes ("alone" time) in the testing space with a novel object (mechanical cat). Scoring measures the reaction to novel object (mechanical cat) including fear behavior and approach / avoidance. Scores are from a principal components analysis. Higher scores reflect more rapid approach and interaction with the novel object.

According to this test, the result is determined according to the amount of time, in seconds, until pup makes first sound during the alone time (First 2 min). If dog never vocalizes, it receives the highest score of 120s. Vocalizations include: groan/growl, whine, yelp/bark, or howl. For performing the novel object bold trial, the skilled artisan can notably refer to Bray et al. (2017, Anim Cogn, Vol. 20 : 923-939), Goddard et al. (1984, Appl Anim Behav Sci, Vol. 12 : 267-278), King et al. (2003, Appl Anim Behav Sci, Vol. 82 : 45-64) or to Marshall-Pescini et al. (2017, Front Psychol, Vol. 8).

According to the **"surprising events : reactive and fearful"** trial, it is measured the canine's reaction to a series of unexpected and potentially startling stimuli, with methods adapted from previously published studies. The canine is presented with a sequence of three potentially startling stimuli and the canine's behavioral reactivity as well as subsequent recovery is scored from video using an ethogram. After each surprising event, the experimenter sets the stimulus on the ground and the canine is free to explore alone for 15 s. The experimenter then returns and vocally encourages the canine to approach and eat kibble near the previously startling stimulus. After the third event (loud noise), the handler and experimenter leave the immediate testing area and stand in the corner, leaving the canine alone in the testing area for a brief 1-min period. The canine's behavior is scored from video using an ethogram including measures related to fear and startle behaviors, and approach or avoidance of the stimulus. Principal components analysis is used to derive summary variables capturing individual differences in behavior. For performing the surprising events trial, the skilled artisan can refer to Bray et al. (2017, Anim Cogn, Vol. 20 : 923-939), Sherman et al. (2015, J Vet Behav, Vol. 10 : 94-102) or to Van Der Borg et al. (1991, Appl Anim Behav, Vol. 32 : 237-251).

According to the trial's phase termed **"sheet reaction",** canine is presented with potentially startling stimulus *i.e*. a section of sheet metal being manipulated to produce an oscillating sound ("sheet"). Reaction to the stimulus is scored. Scores are from a principal components analysis with higher scores reflecting stronger reactions to the startle stimuli. According to this test, the result is determined according to the initial reaction score of the dog to the sheet stimulus. Beginning within one second - immediate response. The most extreme reaction visible until stimulus hits the ground. Scored 1-4 with higher scores indicating a stronger reaction from: 1=no detectable reaction to 4=avoidance response away from stimulus. For performing the sheet reaction trial, the skilled artisan can refer to Bray et al. (2020, Anim Behav, Vol. 166C : 193-206) or to King et al. (2003, Appl Anim Behav Sci, Vol. 82 : 45-64)

According to the trial's test termed "sheet **vocalization intensity",** canine is presented with potentially startling stimulus *i.e*. a section of sheet metal being manipulated to produce an oscillating sound ("sheet"). Reaction to the stimulus is scored. Scores are from a principal components analysis with higher scores reflecting stronger reactions to the startle stimuli. According to this test, the result is determined according to the maximum intensity of vocalization during the presentation of the sheet stimulus, any time before being picked up for reapproach. Score 0-4: 0= none, 1= Groan/growl, 2=whine, 3=yelp/bark, 4=howl. For performing the sheet vocalization intensity trial, the skilled artisan can refer to Bray et al. (2020, Anim Behav, Vol. 166C : 193-206).

According to the trial's phase termed **"Experimenter orientation when alone",** after completing the novel stimuli and reapproach phases, the canine is left alone in the pen for 1 minute while the experimenter and handler are standing just outside of it, quietly ignoring the canine. Behaviors scored include vocalization and orienting toward the experimenters. According to this test, the result is determined according to the amount of time, in seconds, the canine faces/orients toward the experimenters during the 1 minute while they are quietly standing outside of the pen. Canine's head must be oriented toward experimenters, if body is oriented but head is turned away, this does not count. For performing the Experimenter orientation when alone trial, the skilled artisan can refer to Bray et al. (2020, Anim Behav, Vol. 166C : 193-206).

According to the trial's phase termed **"Latence to vocalization when alone",** after completing the novel stimuli and reapproach phases, the canine is left alone in the pen for 1 minute while the experimenter and handler are standing just outside of it, quietly ignoring the canine. Behaviors scored include vocalization and orienting toward the experimenters. According to this test, the result is determined according Amount of time, in seconds, until canine makes first vocalization during the 1 minute while experimenters are standing quietly outside of the pen. If canine never vocalizes, it receives the highest score of 60s. Vocalizations include: groan/growl, whine, yelp/bark, or howl. For performing the Latence to vocalization when alone trial, the skilled artisan can refer to Bray et al. (2020, Anim Behav, Vol. 166C : 193-206).

According to the trial's phase termed **"Maximal vocalization when alone",** After completing the novel stimuli and reapproach phases, the canine is left alone in the pen for 1 minute while the experimenter and handler are standing just outside of it, quietly ignoring the canine. Behaviors scored include vocalization and orienting toward the experimenters. According to this test, the result is determined according maximum intensity of vocalization during the 1 minute while experimenters are standing quietly outside of the pen. Score 0-4: 0=none, 1= Groan/growl, 2=whine, 3=yelp/bark, 4=howl. For performing the Maximal vocalization when alone trial, the skilled artisan can refer to Bray et al. (2020, Anim Behav, Vol. 166C : 193-206).

### C. Statistics

The significance of the results was assessed according to the well-known t-test (parametric test) and Wilcoxon test (non-parametric test) if the variable tested is continuous or not.

### Example 1. Composition formulation

An embodiment of a food composition of the present disclosure that is useful for preserving or improving canine mental health is disclosed in Example 1.

One possible combination of a nucleotide source and of sources of oligosaccharides according to the present disclosure is provided hereafter.

**Table 1. Examples of food formulations**

| Active Ingredient | Amount in mg per kg of dry matter of the composition | Weight in % of the total weight of the composition |
|---|---|---|
| **scFOS** | **4875 mg** | **0.5%** |
| **XOS** | **3000 mg** | **0.3%** |
| Yeast extract enriched in nucleotides | - | 0.33% |
| Purines (AMP + GMP + IMP) | 514 mg | 0.05% |
| Pyrimidines (CMP + UMP) | 626 mg | 0.06% |
| **Total amount of nucleotides** | **1130 mg** | **0.11%** |
| Betacarotene | 7 mg | 0.0007% |
| Vitamin E | 280 mg | 0.03% |
| Arginine | Level reached by the other ingredients | |

The yeast-extract enriched in nucleotides was selected from petMOD^{™} and petMOD^{™}S feed material sources, which are commercialized by PROSOL S.P.A.

The xylo-oligosaccharide (XOS) source was a XOS powder composition including XOS (35% to 40% of dry weight of the source) in combination with maize maltrodextrin (30 to 35%), maize fiber including xylose and xylan (25 to 35%).

The short-chain fructo-oligosaccharide (scFOS) source was a PROFEED^{®} composition including short-chain fructooligosaccharides (sc-FOS) obtained from sucrose. They consisted of a combination of 1-kestose (GF2) (about 37%), nystose (GF3) (about 53%), and 1F-β-fructofuranosyl nystose (GF4) (about 10%). GF2, GF3, and GF4 are formed by a sucrose (glucose-fructose) molecule linked to respectively one, two or three fructose units added by β2-1 glycosidic linkages to the fructose unit of sucrose.

### Example 2. Assessment of the effect of the food composition of Example 1 on canine's mental health, such as cognitive functions and coping mechanisms.

The results of the plurality of trials performed for assessing the effect of a food composition according to the present disclosure, especially of the food composition according to Example 1, on the canine's cognitive functions are disclosed in Table 2 located at the end of the present specification.

A depicted in Table 2, the results of all the cognitive tests which have been performed show a statistically significant positive effect of a food composition according to the present disclosure on the cognitive functions of the canine tested, especially on the cognitive functions of the puppies tested.

The "warmup trials" are dedicated to test the executive function and memory of the canine animals. The results of the "warmup trials" show a higher attention and a faster comprehension of the puppies fed with a food composition according to the present disclosure.

The "pointing gesture" test is focused on (i) the executive function and memory and on (ii) the social behaviour and interactions skills of the canine animals. The results of the "pointing gesture" test show an increase in the autonomy of the puppies fed with a food composition according to the present disclosure, which puppies do no not wait human help for finding a solution.

The "vocal during memory test" is focused on (i) the temperament and on (ii) the executive function and memory skills of the canine animals. The results of the "vocal during memory test" show an increased resilience of the puppies fed with a food composition according to the present disclosure. These puppies exhibit an increased perseverance, an decreased impatience, an increased ability to coping with frustration and a better memory retention.

The "novel object bold" test is focused on the temperament of the canine animals. The results of the "novel object bold" test show that the puppies fed with a food composition according to the present disclosure are less fearful in discovering a new object, are more inquisitive, are more inclined in exploring alone without fear, are more autonomous as well as more self-confident.

The "surprising events : reactive & fearful" test ( "sheet reaction" and sheet vocalization intensity" tests) is focused on the temperament of the canine animals. The "surprising events : reactive & fearful" test ("Experimenter orientation when alone", "Latence to vocalization when alone" and "Maximal vocalization when alone" tests) is focused on (i) temperament and on (ii) the social behaviour and interaction of the canine animals. The results of the "surprising events : reactive & fearful" test show that the puppies fed with a food composition according to the present disclosure are less fearful and reactive when facing a surprising event ("sheet reaction" and "sheet vocalization intensity" tests), are more autonomous and are also more self-confident Experimenter when alone" test). These puppies performed less vocalizations in this test when left alone and are better coping with the situation ("Latence to vocalization when alone" and "Maximal vocalization when alone" tests).

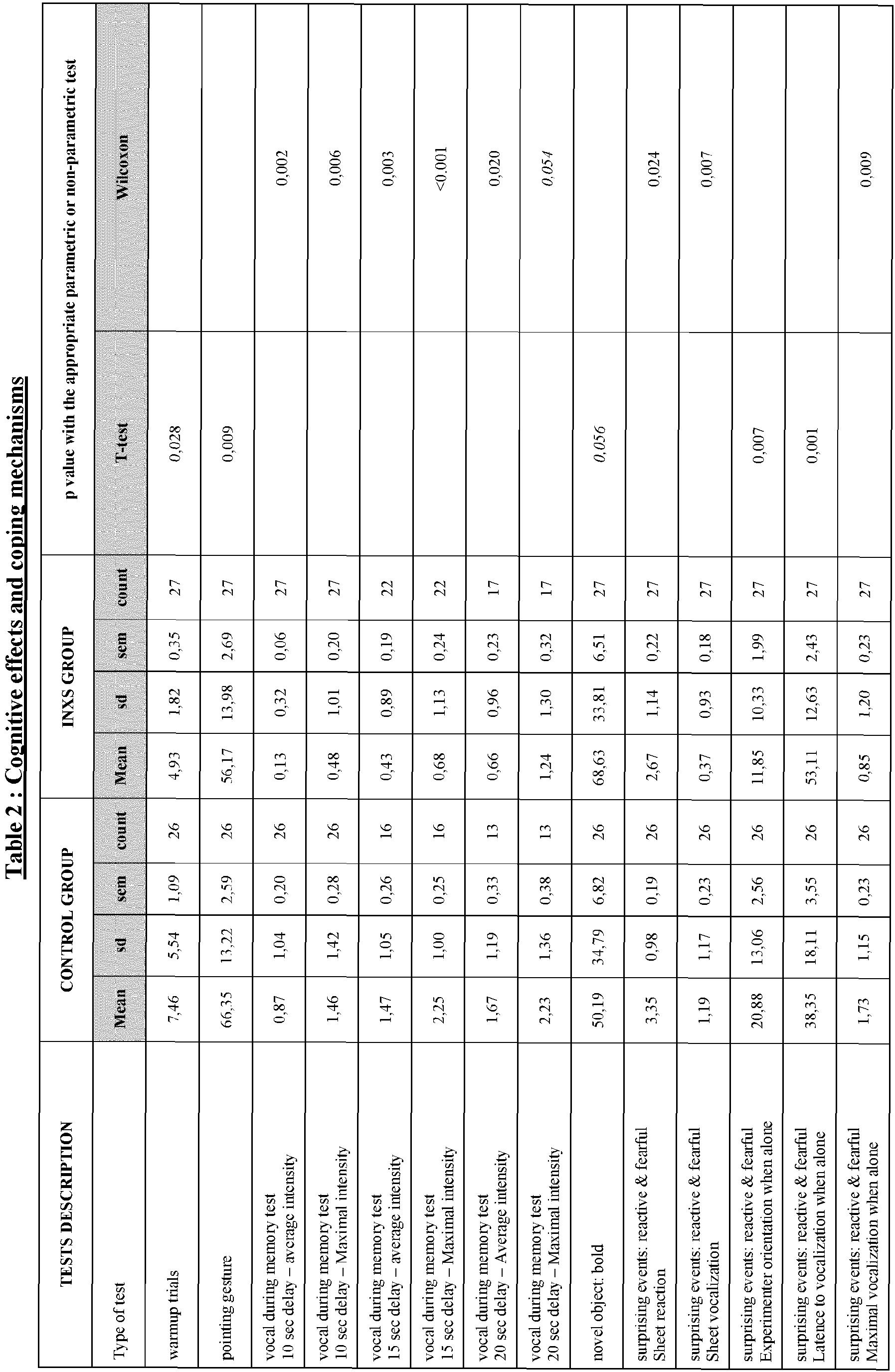

### REFERENCES LISTING

- Zicker et al., 2012, J Am Vet Med Assoc, Vol. 241 : 583-594
- Heath et al., 2007, Applied Animal Behaviour Science,Vol. 105 (4) : 284-296
- Head et al., 2007, Ann N Y Acad, Vol. 1114: 398-406
- Bray et al. (2020, Anim Behav, Vol. 166C : 193-206)
- Bray et al. (2021, Anim Cogn, Vol. 24(2) : 311-328).
- Hare et al. (1998, Evol Commun, Vol. 2 : 137-159)
- Milkosi et al. (1998, Anim Cogn, Vol. 1 : 113-121)
- Dore et al. (1996, Anim Learn Behav, Vol. 24 : 142-149)
- Goddard et al. (1984, Appl Anim Behav Sci, Vol. 12 : 267-278)
- King et al. (2003, Appl Anim Behav Sci, Vol. 82 : 45-64)
- Marshall-Pescini et al. (2017, Front Psychol, Vol. 8).
- Bray et al. (2017, Anim Cogn, Vol. 20 : 923-939)
- Sherman et al. (2015, J Vet Behav, Vol. 10 : 94-102)
- Van Der Borg et al. (1991, Appl Anim Behav, Vol. 32 : 237-251)

## Claims

1. The use of a food composition comprising, in % by weight, i) at least about 0.05% of nucleotides and ii) at least about 0.1% of oligosaccharides, wherein said oligosaccharides are selected from xylo-oligosaccharides (XOS), fructo-oligosaccharides (FOS), galacto-oligosaccharides (GOS), and combinations thereof, for preserving or improving mental health in canine.

2. The use according to claim 1, wherein the said food composition comprises in % by weight, i) from about 0.05% to about 0.5% of nucleotides, and ii) from about 0.1% to about 2% of oligosaccharides, wherein said oligosaccharides are selected from xylo-oligosaccharides (XOS), fructo-oligosaccharides (FOS), galacto-oligosaccharides (GOS), and combinations thereof.

3. The use according to any one of claims 1 and 2, wherein the said food composition comprises, in % by weight:
(i) from about 0.05% to about 0.5% of nucleotides;
(ii) from about 0.1% to about 0.7% of xylo-oligosaccharides (XOS), and/or
(iii) from about 0.3% to about 1% of fructo-oligosaccharides (FOS).

4. The use according to any one of claims 1 to 3, wherein the nucleotides are from a source of nucleotides selected from a yeast extract or a fraction thereof; in particular a yeast extract selected from a *Kluyveromyces* yeast extract or a *Saccharomyces cerevisae* yeast extract, or a fraction thereof.

5. The use according to any one of claims 1 to 4, wherein said nucleotides comprise a combination of pyrimidines and purines.

6. The use according to any one of the claims 1 to 5, wherein the oligosaccharides are selected from xylo-oligosaccharides (XOS), fructo-oligosaccharides (FOS), and combinations thereof.

7. The use according to any one of claims 1 to 6, wherein said XOS comprise XOS composed of xylose units linked by β-(1,4) bonds, with a degree of polymerization (DP) from 2 to 10; and said FOS comprise at least about 50% of short-chain fructo-oligosaccharides (scFOS) in % by weight of the FOS in the food composition on dry matter basis.

8. The use according to any one of claims 1 to 7, wherein the said food composition further comprises :
- from about 0.01% to about 0.1% of Vitamin E, in % by weight; and/or
- from about 0.0001% to about 0.001% of beta-carotene, in % by weight; and/or
- from about 0.1 % to about 10% of arginine, in % by weight.

9. The use according to any one of claims 1 to 8, wherein the said food composition is a dry composition, a wet composition, or a semi-moist composition, in particular a dry composition.

10. The use according to any one of claims 1 to 9, for improving mental health in puppies.

11. The use according to any one of claims 1 to 9, for preserving or improving mental health in adult canine.

12. The use according to any one of claims 1 to 9, for preserving mental health in the aged canine.
